# EUROPEAN PATENT SPECIFICATION

(11) **EP 3 754 500 B1**
(45) Date of publication and mention of the grant of the patent: **16.07.2025**
(21) Application number: 20178396.6
(22) Date of filing: 05.06.2020
(51) Int. Cl.: G06F 9/50

(54) **CLUSTER COMPUTING**
CLUSTER-COMPUTING
CALCUL DE GRAPPES

(30) Priority: 20.06.2019 FI 20195554
(43) Date of publication of application: 23.12.2020
(73) Proprietor: Nokia Technologies Oy, 02610 Espoo (FI)
(72) Inventor: PÖYHÖNEN, Petteri, 03100 Nummela (FI); TUONONEN, Janne, 03100 Nummela (FI)
(74) Representative: Laine IP Oy

(56) References cited:
- US-A1- 2012 209 901
- US-A1- 2013 191 436
- US-B2- 10 135 718
- US-B2- 8 949 308
- US-B2- 9 317 334

## Description

### FIELD

The present disclosure relates to management of distributed computation substrates, such as computing clusters or grids.

### BACKGROUND

Computing tasks may be performed on a single processing unit, such as a processing core, or distributed over plural such units. A distributed computing model is applicable in particular, where the computing task may be divided into at least partly independent parts, such that the plural computing units can process aspects of the computing task in parallel, at least part of the time. Examples of the distributed processing model include cluster computing and grid computing. In grid computing, the processing units may be in general more distributed geographically, more heterogeneous in nature and configured to perform more heterogeneous aspects of the computing task than in cluster computing, where processing units may be configured to perform the same task. In general, the computing cluster and the computing grid are examples of distributed computation substrates.

Edge computing is a form of distributed computing, where elements of a distributed data processing substrate are disposed in a communication network, such that results of computing performed using the data processing substrate may be available to users of the communication network with lower latency, than the case where a data centre is located at a remote site in its entirety. In other words, in edge computing the computing is, at least partly, brought closer to where the results of the computing will be used.

Document US2012/209901 A1 discloses multipath distributed computational node scenarios, wherein on-site and cloud-based calculation are combined by using broker and/or proxy nodes between a head node and worker nodes.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core, at least one memory including computer program code, the at least one memory and the computer program code being configured to, with the at least one processing core, cause the apparatus at least to receive, when within a network environment of a master node of a distributed computation substrate, a computation work package addressed to a worker node, determine, after receiving the computation work package, that the apparatus has geographically moved to a network environment of the worker node or a broker node, wherein the network environment of the master node and the network environment of the worker node or the broker node are geographically separate and not communicatively coupled with each other, and forward the computation work package from the apparatus to the worker node while in the network environment of the worker node or to the broker node while outside the network environment of the master node.

According to a second aspect of the present disclosure, there is provided a method comprising receiving, by an apparatus, when within a network environment of a master node of a distributed computation substrate, a computation work package addressed to a worker node, determining, after receiving the computation work package, that the apparatus has geographically moved to a network environment of the worker node or a broker node, wherein the network environment of the master node and the network environment of the worker node or the broker node are geographically separate and not communicatively coupled with each other, and forwarding the computation work package from the apparatus to the worker node while in the network environment of the worker node or to the broker node while outside the network environment of the master node.

### BRIEF DESCRIPTION OF THE DRAWINGS

FIGURE 1 illustrates an example system in accordance with at least some embodiments of the present invention;
FIGURE 2 illustrates an example system in accordance with at least some embodiments of the present invention;
FIGURE 3 illustrates an example apparatus capable of supporting at least some embodiments of the present invention;
FIGURE 4 illustrates signalling in accordance with at least some embodiments of the present invention;
FIGURE 5 is a flow graph of a method in accordance with at least some embodiments of the present invention;
FIGURE 6 is a flow graph of a method in accordance with at least some embodiments of the present invention, and
FIGURE 7 illustrates an example route with waypoints, in accordance with at least some embodiments of the present invention.

In a distributed computing substrate, some worker nodes of the distributed computing substrate may be outside a network environment of a master node of the distributed computing substrate. The network environment may comprise a mesh or ad hoc network, for example. As such, the master node would not be directly able to transmit work packages to such worker nodes. However, a broker node may be mobile, moving between a first position where it is within the network environment of the master node and a second position where it is within a network environment of the worker node. This enables the broker node to ferry work packages and results of the work between the master node and such worker nodes. Thus, as a technical effect, the distributed computing substrate need not form a continuously connected network environment and a utilization rate of computing resources may be enhanced, with less computing resources idle or out of use.

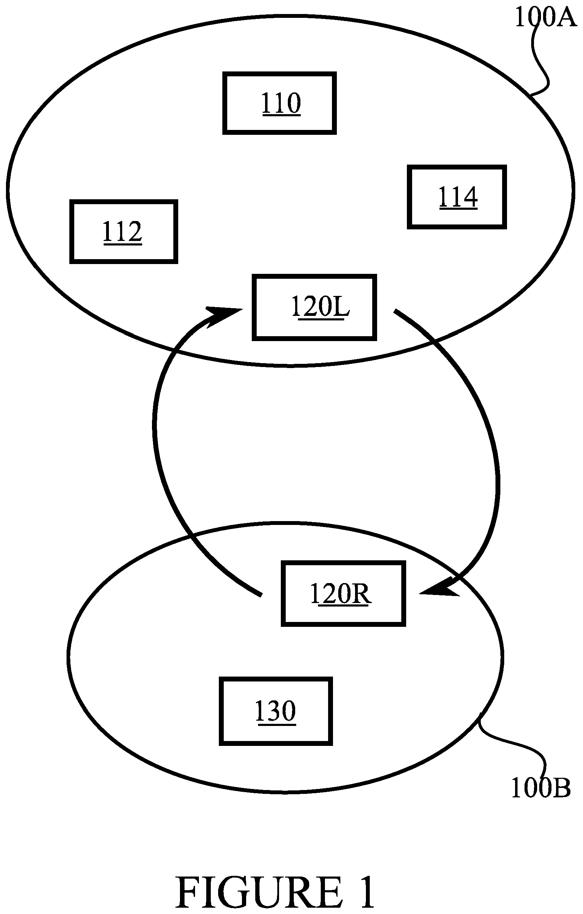

FIGURE 1 illustrates an example system in accordance with at least some embodiments of the present invention. The system comprises a master node 110 of a distributed computation substrate, which may comprise a computation cluster or computation grid, for example. The master node may be a physical master node, or a logical master node comprised of plural physical units. The system further comprises worker nodes 112, 114 and 130. Master node 110 and worker nodes 112, 114 are disposed in a network environment 100A of master node 110. This network environment 100A may comprise a mesh or ad hoc network, or a combination of networks, for example an ad hoc network connected to the Internet. As such, for example worker node 114 may be in another country, and still be within network environment 100A. By the network environment 100A it is herein meant that nodes within the network environment 100A are communicatively coupled with each other such that they may send messages to each other using an addressing scheme, the messages being routed to their destination nodes based on the addressing. Further, a network environment may be seen as a set of nodes communicatively coupled so, that they may exchange messages with each other such that none of the communicatively coupled nodes needs to change its geographic location to convey these messages.

The master node and the worker nodes may comprise computing-capable units, such as desktop, laptop or tablet computers, smartphones, phablets or other suitable devices. The nodes need not be of a same type as it may be possible that, for example, the worker nodes are laptop and desktop computers and the master node is a tablet computer.

In case network environment 100A of master node 110 comprises a mesh/ad hoc network, it may be based, at least partly, on a near-field communication technology such as wireless local area network, WLAN, or Bluetooth, for example. As a further example, a simplified long term evolution, LTE, stack could be used in direct device-to-device mode.

Worker node 130 is not within network environment 100A of master node 110. It has a network environment 100B of its own, which may be based on a near-field communication technology such as WLAN, Bluetooth or the simplified LTE stack, for example. As illustrated in FIGURE 1, network environments 100A, 100B are not communicatively coupled, meaning that messages released into one of these network environments will not be routed to the other based on addressing and routing tables, since there is no stable route connecting these network environments. Worker node 130 may be a relatively simple device with limited processing power. In some embodiments, worker node 130 is not a server.

Further, the system of FIGURE 1 comprises broker node 120L/R. The broker node may be of a similar type as the master and/or worker nodes, as described above, for example. As a further example, the broker node may comprise a wireless-capable control unit of an automobile or an Internet of Things, IoT, or Industry 4.0, node. A broker node may also be configured to perform as a worker node. The broker node may be, for the sake of description, in one of two locations. When it is in the network environment of master node 110, it is denoted as broker node 120L, and when it is in the network environment of worker node 130, it is denoted as broker node 120R. "L" refers to local and "R" to remote from the point of view of master node 110. The movement of the broker node between these locations is denoted using curved arrows in FIGURE 1. The broker node may be enabled to move between positions 120L and 120R without being connected to network environments 100A or 100B. Further, in some embodiments, the broker node is enabled to visit in a specific sequence a plurality of short-range communication capable nodes, such as radio-frequency identification, RFID, tags, to collect from the short-range communication capable nodes a sequence of cryptographic information usable in accessing worker node 130.

When in the network environment 100A of master node 110, broker node 120L may receive a computation work package from master node 110, the computation work package being addressed to worker node 130. In the present text, a computation work package is referred to as a work package for brevity. By such addressing it may be meant addressing in a sense specific to messages of the distributed computation substrate. To enable this, the broker node may advertise an identity and/or capability of worker node 130 to master node 110. The identity and/or capability information may comprise information relating to a messaging route from broker node 120L to worker node 130, as will be described herein. For example, a number and identities of further broker nodes along a route to the worker node may be comprised in the information relating to the messaging route. Broker node 120L may have obtained this information from a previous association with worker node 130, when the broker node was in position 120R. The broker node may store the computation work package in a memory internal to broker node 130, or in a cloud storage of broker node 120L which the broker node may access also when outside the network environment 100A of master node 110. Worker node 130 may, in general, be a mobile node or a fixed, non-mobile node. Where worker node 130 is mobile, it may share or agree route planning information with broker node 120L/R, to facilitate exchanges of work packages and results. Alternatively to disseminating the identity and/or capability information via the broker node, master node 110 may be configured with information characterizing worker node 130, or more generally worker nodes outside network environment 100A of master node 110. As a third option, worker node 130 may, in an initial phase, visit network environment 100A and directly communicate with master node 110 to join the distributed computation substrate. As a yet further variant, master node 110 may issue a request, via at least one broker node, to worker node 130 to visit network environment 100A, if possible.

Broker node 120L/R may interact with more than one worker node not in the network environment 100A of master node 110. For example, broker node 120L/R may complete a workflow comprising multiple work packages using plural such worker nodes. An example is a case where broker node 120L/R instructs a first such worker node to switch on all street lights on a specific street. It may thereafter receive as a result an acknowledgement this has been accomplished, and/or information concerning lights that need replacing. Broker node 120L/R may subsequently interact with a second such worker node to issue to it a work package requesting this worker node to request a repair of the broken lights. Broker node 120L/R would finally report back to master node 110, in position 120L, concerning all the actions undertaken.

One deployment for the system may be a broker node as a moving device, such as a drone carrying a communication device such as an RFID reader, Bluetooth or Bluetooth low-energy transceiver, for example, and a sequence of waypoints each having a tag. In the following an RFID tag is used as an example, with the understanding that in various embodiments the tags may be based on another short-range technology such as the afore-mentioned Bluetooth or Bluetooth-low energy. Waypoints would each provide a part of the signalled sequence of cryptographic information, denoted as D. The parts D together may form an answer to the puzzle, or be usable in deriving the answer. Further, waypoints may be configured to provide a timestamp T in embodiments where a time limit for completing a waypoint puzzle is enforced. Yet further, waypoints may be configured to provide keying material K. In case waypoints provide keying material, this keying material may be used in a subsequent waypoint, for example. In some embodiments, at least a part, and possibly all, of the waypoints are configured to not provide keying material, as that may be provided to the broker node as a pre-shared context relating to the waypoints. For example, a mission may deploy waypoint tags in such way that a resulting route and time limit is possible to reach with drone as a flying device, for example by having a large enough altitude variation. Location information may be in GPS coordinates. The waypoints may be worker nodes, depending on the embodiment. The waypoints may collectively indicate a route from network environment 100A to worker node 130. The sequence of cryptographic information collected from the waypoints may enable the broker node to assign a work package to worker node 130. A waypoint may inform the broker node of the next waypoint in the sequence. For example, a waypoint may provide to the broker node information of a geographical location of the next waypoint, and, in some embodiments, also radio information to facilitate successful communication between the broker node and the next waypoint. The radio information is useful where the waypoints are of a heterogeneous nature, for example.

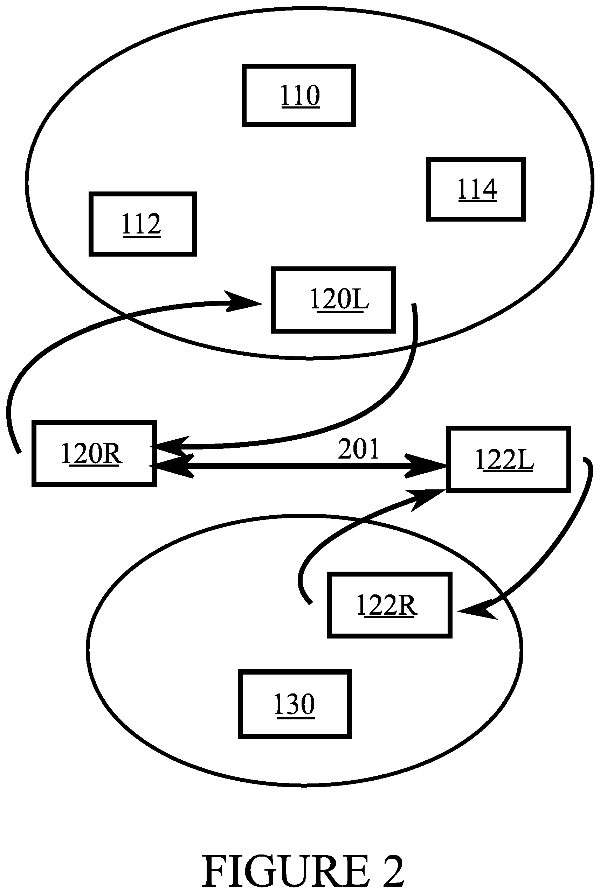

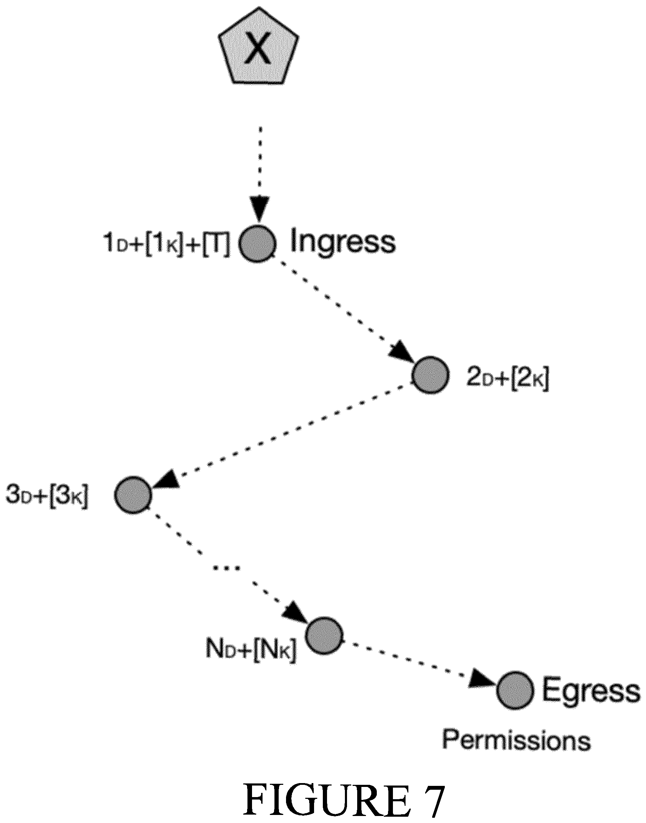

In IoT embodiments, when communicating between IoT nodes assuming the roles of broker nodes and waypoints some authorization or security problems may arise. Therefore, in one embodiment a high-level logic of a puzzle manager is provided. The waypoints may comprise pre-shared secrets/keys to provide access rights, for example.. In one example, once an execute transaction is issued by a master node, a proper pre-shared context may be selected for the requested transaction and the puzzle solution parts may be collected, that is, the broker node interacts with the waypoints in the correct sequence, until it is determined that all puzzle parts have been collected and it is time to create a puzzle solution and open new media channel in order to complete verification with a final waypoint, for example. If the verification is successful, then the requested action is performed and in any case, the status of the verification or the action may be returned back to the execute transaction caller. There may be two types of broker nodes, firstly, ones which navigate autonomously between the network environments of the master node and worker nodes, as illustrated in FIGUREs 1 and 2, and secondly, broker nodes relying on waypoints, as in FIGURE 7.

A waypoint puzzle proceeds from an ingress waypoint to an egress waypoint. Ingress waypoint, N (1 to many) waypoints and Egress waypoint may form a geographical topology that is traversed by broker node starting from the ingress waypoint and ending to the egress waypoint. The goal for the broker node is to perform securely certain actions guarded by the egress waypoint and the solution derived from the collected puzzle(s) is used to grant corresponding permissions. The topology is traversed via certain route, waypoint after waypoint, and from a waypoint perspective, there are 2 phases; 1) pre-waypoint and 2) waypoint, which will be described below. Each data Ld, where L is a unique identifier of a waypoint, provided by a waypoint includes puzzle information required for the egress waypoint verifying the puzzle solution. In other words, in case of eight waypoints, in order to pass the verification phase carried out by the egress waypoint, the puzzle solution is constructed from data vector Ld, where L=[1, ..., 8].

Multiple puzzles, each with a specific route with the related waypoints, could be supported at the same time. The ingress waypoint could use round robin or some other scheme to select which route is provided for requests and each route may have a specific RFID tag sequence as the waypoints, each RFID tag having Ld + Lk +T, where Lk is keying material specific to that waypoint. These routes could use some shared waypoints. Also, considering that broker node may comprise a drone, then since drone IDs could be part of pre-shared contexts, then each route could be assigned to certain drones by having drone IDs included in its tag. In this case, a drone could receive a list of all tags to visit from the ingress waypoint and then it would have to process each tag to see with which routes its ID is associated. And if its ID is associated with more than one route, then it should select the route to be used according to local policies, such as round robin, for example. This multi-tag receiving could be done also in other waypoints after the ingress waypoint, but it also could be that only the ingress waypoint provides route choices after which the drone makes the selection there, subsequently following the selected route. A route is illustrated in FIGURE 7.

A puzzle solution may be created in one embodiment of a use case where a drone has a pre-shared context/secret, with waypoints WP acting as the worker nodes. A route comprises the ingress waypoint, WP2 to WP8 and the egress waypoint, for example. A waypoint comprises location coordinates, like GPS coordinates, for example. Further, for communication, a radio such as RFID may be used. It is the egress waypoint that solves the RFID waypoint puzzle in this example. In this case, the invention is vulnerable, if a rogue drone becomes aware of the pre-shared information of the ingress waypoint, because after that it could solve the puzzle. This could happen due to the fact that anyone can listen to encrypted RFIDs from WPs, but only trusted parties could decrypt and interpret them. To prevent this from happening, there may be more than one pre-shared item of information in each waypoint puzzle.

A further example is a case when the drone has two pre-shared secrets: one with the ingress waypoint and another one with WP-8, for example. In this case, the rogue drone that knows the pre-shared context/secret of the ingress waypoint cannot solve the whole puzzle, because its journey would end at WP-7, because it cannot figure out a next WP, which would be WP-8 - For that it would need also pre-shared info of WP-8.

In a generalization of how a broker node solves a waypoint puzzle is possible. If a timed event feature is used, the ingress waypoint provides a timestamp that the master node may include in the puzzle solution at the egress waypoint. An assumption is herein made, that the ingress and egress waypoints have pre-shared context information that they may use to encrypt/decrypt the timestamp, so that the broker node cannot change it and thus try to fool the egress waypoint to pass timed event verification. A verification procedure at the egress waypoint may comprise checking both the timestamp and the solution. If a timestamp is too old or is altered, the verification fails. After that also the puzzle solution may need to be matched. If the puzzle solution is successful, then broker node is allowed to proceed to task(s) that the waypoint puzzle is built to guard.

Subsequently, when the broker node is in position 120R, it forwards the computation work package to worker node 130, which is then in a position to begin work on the work package. Broker node 120L/R may leave the network environment 100B of worker node 130 while the worker node works on the work package, and collect the result of the computation work package when broker node 120L/R eventually returns to network environment 100B. Once the broker node has the result, it may provide it to master node 110 when it once more finds itself in network environment 100A of master node 110. Of note, the result of the computation work package may be conveyed to master node 110 by nodes other than the specific broker node 120L/R which provided the computation work package to worker node 130. In detail, there may be more than one broker node. There may, further, be separate ways for the result to be provided, as an example a user of worker node 130 may periodically send memory sticks with results of computation work packages to a user of master node 110 by post or courier.

In general, the computation work package and the result may have a same transaction ID, enabling the master node to know, which work package the result completes. Further, a broker node may be configured to maintain source-destination-transaction bindings, such that a request-response pair may be seen as four separate phases: master -> broker, broker -> worker, worker -> broker and broker -> master. Alternatively, broker nodes may be configured to forward work packages and results in a stateless manner, based on routing information in the work packages and results.

Routing information may comprise, for example, a network address and/or geographic location of a worker node. Routing information may further, or alternatively, comprise at least one network address of a node capable of forwarding a work package toward the worker node the work package is addressed to. In some embodiments, an overall end-to-end route from master node 110 to worker node 130 comprises a waypoint-navigated part and an autonomously navigated part, and routing information comprises information usable in proceeding to the ingress waypoint of the waypoint sequence. Information usable in proceeding to the ingress waypoint of the waypoint sequence may comprise at least one of: a location of the ingress waypoint, radio capabilities of the ingress waypoint, at least one protocol used by the ingress waypoint, for example. This information may thus not only assist in proceeding to the ingress waypoint, but also in communicating with the ingress waypoint.

The computation work package comprises instructions for processing in a worker node, such as worker node 130. The work package may comprise data to be processed, or, alternatively or additionally, information enabling a worker node to obtain the data. Master node 110 may be configured to provide computation work packages also to worker nodes 112 and 114, as these are within the network environment 100A the master node 110 can easily send these work packages to these worker nodes. In some embodiments, master node 110 decides based on the capability of a worker node the work package is intended for whether to include the data, such that for worker nodes capable of accessing the data over a network, master node 110 does not include the data but for worker nodes not capable of accessing the data over a network, master node 110 includes the data in the work package. In general, a work package may comprise one or more tasks for a worker node to perform. A work package may comprise routing information to assist in delivering it to the correct worker node.

A computation work package of the distributed computation substrate comprising worker nodes 112, 114 and 130 may be directed to an individual aspect of a larger parallelized computing process. For example, simulating protein folding, processing astrophysical or particle-physics experimental data and numerical searches for pharmaceutical compounds are processing-intensive computational tasks which lend themselves to being performed in parallel processes with relative ease.

As illustrated in FIGURE 1, when broker node 120L/R moves in a cyclical and predictable manner between network environments 100A and 100B, the master node 110 is enabled to include worker node 130 in the distributed computation substrate it manages. Computation work packages and results thereof may be communicated between worker node 130 and master node 110 via broker node 120L/R. To an extent, broker node 120L/R may appear as worker node 130 toward master node 110, and broker node 120L/R may appear as master node 110 toward worker node 130.

A node may become a broker node in a dynamical process, whereby the node keeps a record of worker nodes it encounters as it moves around, for example as it is carried around by a user as he moves about his daily routines. A node may determine, based on its records, that it tends to encounter specific worker nodes more or less regularly, and as a response to this determination, offer the capabilities of these worker nodes to master node 110. In this aspect, worker node 130 need not be immobile, as it is sufficient that it encounters the broker node repeatedly. The worker nodes may indicate, for example as broadcasted information, their identity and/or capability and willingness to participate in a distributed computation substrate, for example. In case master node 110 does not trust a specific worker node outside the master node's network environment 100A, the master node may provide the data to be computed on as part of the computation work package in encrypted form, the work package comprising instructions for the worker node to perform processing on this encrypted data using homomorphic encryption, such that the worker node may process the data without learning the content of the data.

A dynamic broker node role may arise naturally from the daily habits of users, since people often have regular routes they take, for example from home to work, work to gym, and gym to home. In general, the master node may be configured to perform asynchronously, not waiting for a result of a computation work package before sending out further computation work packages to other worker nodes. This is especially useful with worker nodes connected to the master node via broker nodes, as delays in communication may be long and unpredictable in length.

FIGURE 2 illustrates an example system in accordance with at least some embodiments of the present invention. In detail, the system of FIGURE 2 has two broker nodes, 120L/R and 122L/R. Like numbering denotes like structure as in FIGURE 1. Broker node 120L/R may be configured essentially as in the system of FIGURE 1, except that in the system of FIGURE 2, this broker node is configured to interact not only with master node 110 and worker nodes, but also with other broker nodes, such as broker node 122L/R. Broker node 122L/R is mobile, like broker node 120L/R, and has a "local" position 122L and a "remote" position 122R. In position 122R, this broker node is within the network environment of worker node 130.

In the embodiment of FIGURE 2, broker node 120L/R receives identity and/or capability information of worker node 130 not directly from worker node 130, but from worker node 130 via broker node 122L/R, as broker node moves from position 122R, where it receives this information from worker node 130 to position 122L, where it can provide this information to broker node 120L/R. Broker node 120L/R provides this identity and/or capability information to master node 110, and receives a computation work package for worker node 130 from master node 110 when in position 120L. When in position 120R, broker node 120L/R forwards the work package to broker node 122L/R which is them position 122L. Thus, in general, a broker node may communicate a work package between itself and either the worker node the work package is addressed to, or another broker node. This amounts to requesting that broker node 122L/R forward the computation work package onward toward worker node 130. Communication interface 201 enables communication between the broker nodes. Communication interface 201 may comprise a Bluetooth, Wibree, WLAN interface or a simplified LTE stack in direct device to device mode, for example. A work package may comprise routing information to assist forwarding to toward, and ultimately delivering it to, worker node 130. The master node may compile this routing information based on the identity and/or capability information it received, for example. A routing protocol may be used in relaying work packages and/or results in case paths are not static. Where broker nodes are stateful, the route from master node to worker node may be the same, but in reverse order, as the route from worker node to master node. In some embodiments, a route from master node to worker node is based on routing information in the work package, but the reverse route is determined dynamically based on a routing protocol. In some embodiments routes in both directions are based on routing information, whereas in some embodiments, on the other hand, both directions are based on a routing protocol and in yet further embodiments, the route from master node to worker node is based on a routing protocol and the reverse route on routing information. In some embodiments, routing protocols and routing information may be freely used between master node(s) and worker node(s).

When in positions 120R and 122L, the broker nodes may both be outside the network environments of both the master node 110 and the worker node 130, as illustrated in FIGURE 2.

Broker node 120L/R may be configured to add an indication to the identity and/or capability information of worker node 130, indicating to master node 110 that broker node 120L/R has not directly been in communication with this worker node. Master node 110 may take this indication into account when compiling computation work packages for worker nodes, since a worker node only reachable over two broker nodes may be less reliably reachable than a worker node reachable over a single broker node. In principle, there may be more than two broker nodes in a chain of broker nodes. In such embodiments, each broker node may be configured to add the indication to the identity and/or capability information, such that the master node is thereby enabled to determine the length of the broker node chain needed to reach that specific worker node.

In some embodiments, the longer the chain, the less reliable is the reachability. Master node 110 may be configured to assign less urgent computation work packages to worker nodes behind longer chains of broker nodes. In general, a master node may be configured to determine, from identity and/or capability information relating to a worker node, a length of a broker node chain connecting the master node to the worker node, and to assign more urgent computation work packages to worker nodes with shorter broker node chains, and to assign less urgent computation work packages to worker nodes with longer broker node chains. For example, a protein-folding simulation work package may be seen as less urgent, while processing a radar signal may be seen as more urgent.

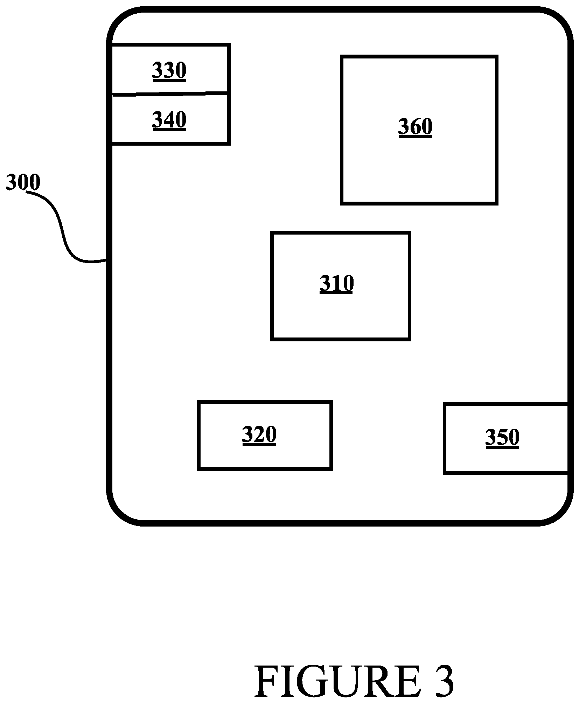

FIGURE 3 illustrates an example apparatus capable of supporting at least some embodiments of the present invention. Illustrated is device 300, which may comprise, for example, a master node or broker node of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices, AMD Corporation. Processor 310 may comprise at least one AMD Ryzen and/or Intel Core processor. Processor 310 may comprise at least one application-specific integrated circuit, ASIC. Processor 310 may comprise at least one field-programmable gate array, FPGA. Processor 310 may be means for performing method steps in device 300. For example, processor 310 may be means for receiving, forwarding and providing. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure distributed processing tasks.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350.

Processor 310, memory 320, transmitter 330, receiver 340, NFC transceiver 350 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

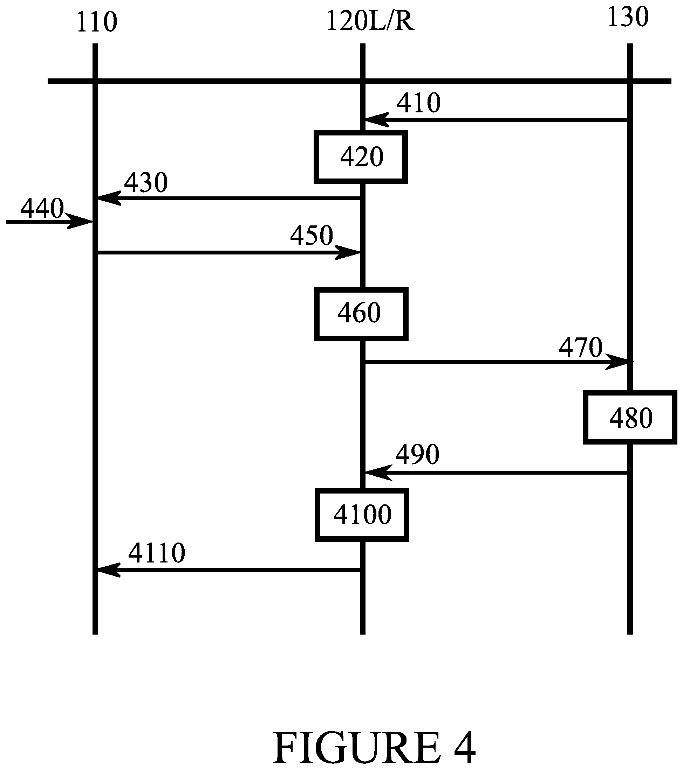

FIGURE 4 illustrates signalling in accordance with at least some embodiments of the present invention. On the vertical axes are disposed, from the left to the right, master node 110, broker node 120L/R and worker node 130 of FIGURE 1. Time advances from the top toward the bottom.

In phase 410, broker node 120L/R receives identity and/or capability information of worker node 130, while in communication with worker node 130, that is, in the "R" position of FIGURE 1. In phase 420, broker node 120L/R moves to the "L" position in FIGURE 1, and subsequently provides, in phase 430, the identity and/or capability information to master node 110 which thus becomes aware of the capabilities of worker 130, which it may invoke in the distributed computation substrate, such as grid, that master node 110 coordinates.

In phase 440, the master node is triggered to perform computational tasks using its distributed computation substrate. In response, master node 110 compiles computation work packages and distributes them to worker nodes in the distributed computation substrate. One of the work packages is addressed to worker 130, and this package is provided to broker node 120L/R in phase 450. In response, broker node 120L/R stores the work package and, once it has moved, phase 460, to the "R" position of FIGURE 1, forwards, phase 470, the work package to worker node 130.

Worker node 130 processes the work package to obtain a result, phase 480, and worker node 130 provides the result to broker node 120L/R in phase 490. After broker node 120L/R has moved back to the "L" position of FIGURE 1, phase 4100, broker node 120L/R provides the result to master node 110, phase 4110. Thus master node 110 has, overall, successfully had the work package processed by the remote worker node 130, by using broker node 120L/R to relay the work package and result. Broker node 120L/R may move between the "L" and "R" positions of FIGURE 1 several times during the time worker node 130 spends processing the work package, and likewise the broker node may leave position "L" and return there at least once between phases 430 and 450.

Worker node 130 may provide results of more than one work package at the same time, when the broker node is within the network environment of worker node 130.

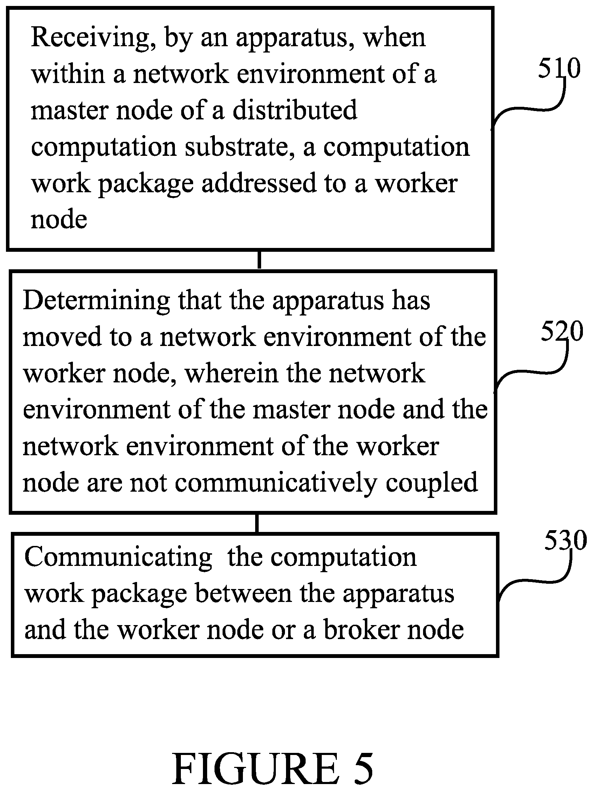

FIGURE 5 is a flow graph of a method in accordance with at least some embodiments of the present invention. The phases of the illustrated method may be performed in broker node 120L/R, or in a control device configured to control the functioning thereof, when installed therein.

Phase 510 comprises receiving, by an apparatus, when within a network environment of a master node of a distributed computation substrate, a computation work package addressed to a worker node. Phase 520 comprises determining that the apparatus has moved to a network environment of the worker node, wherein the network environment of the master node and the network environment of the worker node are not communicatively coupled. Not being communicatively coupled may comprise not being communicatively coupled with each other. Phase 530 comprises communicating the computation work package between the apparatus and the worker node or a broker node. This may comprise providing the work package to the worker node or to a broker node for forwarding onward to the worker node.

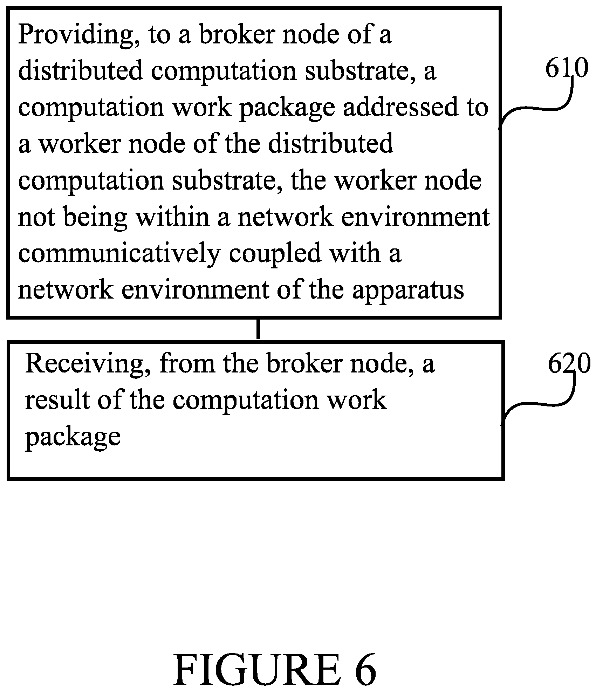

FIGURE 6 is a flow graph of a method in accordance with at least some embodiments of the present invention. The phases of the illustrated method may be performed in master node 110, or in a control device configured to control the functioning thereof, when installed therein.

Phase 610 comprises providing, by an apparatus, to a broker node of a distributed computation substrate, a computation work package addressed to a worker node of the distributed computation substrate, the worker node not being within a network environment communicatively coupled with a network environment of the apparatus. Phase 620 comprises receiving, from the broker node, a result of the computation work package.

It is to be understood that the use of "a" or "an", that is, a singular form, throughout this document does not exclude a plurality.

### INDUSTRIAL APPLICABILITY

At least some embodiments of the present invention find industrial application in obtaining enhances use rates of geographically distributed computation nodes.

### REFERENCE SIGNS LIST

| | |
|---|---|
| 110 | Master node |
| 112, 114, 130 | Worker nodes |
| 120L/R, 122L/R | Broker nodes |
| 100A, 100B | Network environments |
| 201 | Communication interface |
| 300 - 360 | Structure of the device of FIGURE 3 |
| 410 - 4110 | Phases of signalling of FIGURE 4 |
| 510 - 520 | Phases of the method of FIGURE 5 |
| 610 - 620 | Phases of the method of FIGURE 6 |

## Claims

1. An apparatus (300) comprising at least one processing core (310), at least one memory (320) including computer program code, the at least one memory (320) and the computer program code being configured to, with the at least one processing core (310), cause the apparatus (300) at least to:
- receive (510), when within a radio network environment of a master node of a distributed computation substrate, a computation work package addressed to a worker node, and
- forward (530) the computation work package from the apparatus to the worker node,
- **characterized in that** the at least one memory (320) and the computer program code are configured to, with the at least one processing core (310), further cause the apparatus (300) to:
- determine (520), after receiving the computation work package, that the apparatus (300) has geographically moved to a radio network environment of the worker node, wherein the radio network environment of the master node and the radio network environment of the worker node are geographically separate and not directly communicatively coupled with each other, and to perform the forwarding (530) to the worker node in the radio network environment of the worker node, and
- receive a result of the computation work package from the worker node and forward the result to the master node when the apparatus is in the radio network environment of the master node.

2. The apparatus according to claim 1, wherein the apparatus (300) is configured to perform the communicating (530) of the computation work package to the worker node within the network environment of the worker node.

3. The apparatus (300) according to any preceding claims, wherein the result comprises at least one of:
- an indication on a route for the apparatus (300) to go to a different worker node, and/or
- an indication of a route used by the apparatus when within the network environment of the master node.

4. The apparatus (300) according to any preceding claims, wherein the apparatus (300) is further configured to communicate with the master node, when in the network environment of the master node, via an ad hoc network, the network environment of the master node comprising the ad hoc network.

5. The apparatus (300) according to any preceding claims, wherein the apparatus (300) is further configured to provide to the master node at least one of identity, authorization and/or capability information of the worker node, the identity, authorization and/or capability information comprising information relating to a messaging route from the apparatus (300) to the worker node.

6. A method comprising:
- receiving (510), by an apparatus, when within a radio network environment of a master node of a distributed computation substrate, a computation work package addressed to a worker node, and
- forwarding (530) the computation work package from the apparatus to the worker node or to a broker node,
**characterized by**
- determining (520), after receiving the computation work package, that the apparatus has geographically moved to a radio network environment of the worker node or a broker node, wherein the radio network environment of the master node and the radio network environment of the worker node or the broker node are geographically separate and not directly communicatively coupled with each other, and by either performing the forwarding (530) to the worker node in the radio network environment of the worker node, or by performing the forwarding (530) to the broker node outside the radio network environment of the master node, and
- receiving a result of the computation work package from the worker node or the broker node and forwarding the result to the master node when the apparatus is in the radio network environment of the master node.

7. The method according to claim 6, wherein the communicating (530) comprises communicating the computation work package to the worker node within the radio network environment of the worker node.

8. The method according to any of claims 8 - 9, further comprising providing to the master node identity and/or capability information of the worker node, the identity and/or capability information comprising information relating at least to a messaging route from the apparatus to the worker node.

## Patentansprüche

1. Einrichtung (300), die mindestens einen Verarbeitungskern (310), mindestens einen Speicher (320), der einen Computerprogrammcode beinhaltet, umfasst, wobei der mindestens eine Speicher (320) und der Computerprogrammcode dazu ausgelegt sind, die Einrichtung (300) mit dem mindestens einen Verarbeitungskern (310) mindestens zu Folgendem zu veranlassen:
- Empfangen (510) eines Datenverarbeitungsarbeitspakets, das an einen Arbeiterknoten adressiert ist, wenn sie sich in einer Funknetzwerkumgebung eines Masterknotens eines verteilten Datenverarbeitungssubstrats befindet, und
- Weiterleiten (530) des Datenverarbeitungsarbeitspakets von der Einrichtung zum Arbeiterknoten,
- **dadurch gekennzeichnet, dass** der mindestens eine Speicher (320) und der Computerprogrammcode dazu ausgelegt sind, die Einrichtung (300) mit dem mindestens einen Verarbeitungskern (310) ferner zu Folgendem zu veranlassen:
- Bestimmen (520), dass sich die Einrichtung (300) geografisch zu einer Funknetzwerkumgebung des Arbeiterknotens bewegt hat, nach Empfangen des Datenverarbeitungsarbeitspakets, wobei die Funknetzwerkumgebung des Masterknotens und die Funknetzwerkumgebung des Arbeiterknotens geografisch getrennt und kommunikativ nicht direkt aneinandergekoppelt sind, und Durchführen des Weiterleitens (530) zum Arbeiterknoten in der Funknetzwerkumgebung des Arbeiterknotens, und
- Empfangen eines Ergebnisses des Datenverarbeitungsarbeitspakets vom Arbeiterknoten und Weiterleiten des Ergebnisses zum Masterknoten, wenn sich die Einrichtung in der Funknetzwerkumgebung des Masterknotens befindet.

2. Einrichtung nach Anspruch 1, wobei die Einrichtung (300) dazu ausgelegt ist, das Kommunizieren (530) des Datenverarbeitungsarbeitspakets zum Arbeiterknoten in der Netzwerkumgebung des Arbeiterknotens durchzuführen.

3. Einrichtung (300) nach einem der vorhergehenden Ansprüche, wobei das Ergebnis mindestens eines von Folgendem umfasst:
- einer Anzeige einer Route für die Einrichtung (300) zum Wechseln zu einem anderen Arbeiterknoten, und/oder
- einer Anzeige einer Route, die von der Einrichtung verwendet wird, wenn sie sich in der Netzwerkumgebung des Masterknotens befindet.

4. Einrichtung (300) nach einem der vorhergehenden Ansprüche, wobei die Einrichtung (300), wenn sie sich in der Netzwerkumgebung des Masterknotens befindet, ferner dazu ausgelegt ist, mit dem Masterknoten via ein Adhocnetzwerk zu kommunizieren, wobei die Netzwerkumgebung des Masterknotens das Adhocnetzwerk umfasst.

5. Einrichtung (300) nach einem der vorhergehenden Ansprüche, wobei die Einrichtung (300) ferner dazu ausgelegt ist, dem Masterknoten mindestens eines von Identitäts-, Autorisierungs- und/oder Fähigkeitsinformationen des Arbeiterknotens bereitzustellen, wobei die Identitäts-, Autorisierungs- und/oder Fähigkeitsinformationen Informationen umfassen, die sich auf eine Messagingroute von der Einrichtung (300) zum Arbeiterknoten beziehen.

6. Verfahren, das Folgendes umfasst:
- Empfangen (510) eines Datenverarbeitungsarbeitspakets, das an einen Arbeiterknoten adressiert ist, wenn sie sich in einer Funknetzwerkumgebung eines Masterknotens eines verteilten Datenverarbeitungssubstrats befindet, durch eine Einrichtung und
- Weiterleiten (530) des Datenverarbeitungsarbeitspakets von der Einrichtung zum Arbeiterknoten oder zu einem Vermittlerknoten,
- **gekennzeichnet durch**
- Bestimmen (520) nach Empfangen des Datenverarbeitungsarbeitspakets, dass sich die Einrichtung geografisch zu einer Funknetzwerkumgebung des Arbeiterknotens oder eines Vermittlerknotens bewegt hat, wobei die Funknetzwerkumgebung des Masterknotens und die Funknetzwerkumgebung des Arbeiterknotens oder des Vermittlerknotens geografisch getrennt und kommunikativ nicht direkt aneinandergekoppelt sind, und entweder durch Durchführen des Weiterleitens (530) zum Arbeiterknoten in der Funknetzwerkumgebung des Arbeiterknotens oder durch Durchführen des Weiterleitens (530) zum Vermittlerknoten außerhalb der Funknetzwerkumgebung des Masterknotens, und
- Empfangen eines Ergebnisses des Datenverarbeitungsarbeitspakets vom Arbeiterknoten oder vom Vermittlerknoten und Weiterleiten des Ergebnisses zum Masterknoten, wenn sich die Einrichtung in der Funknetzwerkumgebung des Masterknotens befindet.

7. Verfahren nach Anspruch 6, wobei das Kommunizieren (530) das Kommunizieren des Datenverarbeitungsarbeitspakets zum Arbeiterknoten in der Funknetzwerkumgebung des Arbeiterknotens umfasst.

8. Verfahren nach einem der Ansprüche 8 bis 9, das ferner das Bereitstellen von Identitäts- und/oder Fähigkeitsinformationen des Arbeiterknotens für den Masterknoten umfasst, wobei die Identitäts- und/oder die Fähigkeitsinformationen Informationen umfassen, die sich mindestens auf eine Messagingroute von der Einrichtung zum Arbeiterknoten beziehen.

## Revendications

1. Appareil (300) comprenant au moins un noyau de traitement (310), au moins une mémoire (320) comportant un code de programme informatique, l'au moins une mémoire (320) et le code de programme informatique étant configuré pour, avec l'au moins un noyau de traitement (310), amener l'appareil (300) à au moins :
- dans un environnement de réseau radio d'un nœud instructeur d'un substrat de calcul distribué, recevoir (510) un ensemble d'opérations pour un travail de calcul adressé à un nœud de travailleur, et
- transférer (530) l'ensemble d'opérations pour un travail de calcul de l'appareil au nœud de travailleur,
- **caractérisé en ce que** l'au moins une mémoire (320) et le code de programme informatique sont configurés pour, avec l'au moins un noyau de traitement (310), amener en outre l'appareil (300) à :
- après avoir reçu l'ensemble d'opérations pour un travail de calcul, déterminer (520) que l'appareil (300) s'est déplacé géographiquement vers un environnement de réseau radio du nœud de travailleur, dans lequel l'environnement de réseau radio du nœud instructeur et l'environnement de réseau radio du nœud de travailleur sont géographiquement séparés et ne sont pas directement couplés l'un à l'autre, et effectuer le transfert (530) au nœud de travailleur dans l'environnement de réseau radio du nœud de travailleur, et
- recevoir un résultat de l'ensemble d'opérations pour un travail de calcul en provenance du nœud de travailleur, et transférer le résultat au nœud instructeur lorsque l'appareil est dans l'environnement de réseau radio du nœud instructeur.

2. Appareil selon la revendication 1, dans lequel l'appareil (300) est configuré pour effectuer la communication (530) de l'ensemble d'opérations pour un travail de calcul au nœud de travailleur dans l'environnement de réseau du nœud de travailleur.

3. Appareil (300) selon l'une des revendications précédentes, dans lequel le résultat comprend au moins un parmi :
- une indication sur un itinéraire pour que l'appareil (300) se rende à un nœud de travailleur différent, et/ou
- une indication d'un itinéraire utilisé par l'appareil lorsqu'il se trouve dans l'environnement de réseau du nœud instructeur.

4. Appareil (300) selon l'une des revendications précédentes, dans lequel l'appareil (300) est en outre configuré pour communiquer avec le nœud instructeur lorsqu'il se trouve dans l'environnement de réseau du nœud instructeur via un réseau ad hoc, l'environnement de réseau du nœud instructeur comprenant le réseau ad hoc.

5. Appareil (300) selon l'une des revendications précédentes, dans lequel l'appareil (300) est en outre configuré pour fournir au nœud instructeur des informations d'identité, d'autorisation et/ou de capacité du nœud de travailleur, les informations d'identité, d'autorisation et/ou de capacité comprenant des informations relatives à un itinéraire de messagerie allant de l'appareil (300) au nœud de travailleur.

6. Procédé comprenant les étapes suivantes :
- dans un environnement de réseau radio d'un nœud instructeur d'un substrat de calcul distribué, recevoir (510), par un appareil, un ensemble d'opérations pour un travail de calcul adressé à un nœud de travailleur, et
- transférer (530) l'ensemble d'opérations pour un travail de calcul de l'appareil au nœud de travailleur ou à un nœud de courtier,
**caractérisé par** les étapes suivantes
- après avoir reçu l'ensemble d'opérations pour un travail de calcul, déterminer (520) que l'appareil s'est déplacé géographiquement vers un environnement de réseau radio du nœud de travailleur ou d'un nœud de courtier, dans lequel l'environnement de réseau radio du nœud instructeur et l'environnement de réseau radio du nœud de travailleur ou du nœud de courtier sont géographiquement séparés et ne sont pas directement couplés l'un à l'autre, et soit en effectuant le transfert (530) au nœud de travailleur dans l'environnement de réseau radio du nœud de travailleur, soit en effectuant le transfert (530) au nœud de courtier en dehors de l'environnement de réseau radio du nœud instructeur, et
- recevoir un résultat de l'ensemble d'opérations pour un travail de calcul en provenance du nœud de travailleur ou du nœud de courtier, et transférer le résultat au nœud instructeur lorsque l'appareil est dans l'environnement de réseau radio du nœud instructeur.

7. Procédé selon la revendication 6, dans lequel la communication (530) comprend la communication de l'ensemble d'opérations pour un travail de calcul au nœud de travailleur dans l'environnement de réseau radio du nœud de travailleur.

8. Procédé selon l'une des revendications 8 et 9, comprenant en outre la fourniture au nœud instructeur d'informations d'identité et/ou de capacité du nœud de travailleur, les informations d'identité et/ou de capacité comprenant des informations relatives au moins à un itinéraire de messagerie allant de l'appareil au nœud de travailleur.
